# EUROPEAN PATENT APPLICATION

(11) **EP 4 791 076 A1**
(43) Date of publication of application: **12.08.2026**
(21) Application number: 23954695.5
(22) Date of filing: 02.10.2023
(51) Int. Cl.: H04W 28/084, H04W 76/30

(54) **NETWORK NODE, TERMINAL, AND PROCESSING METHOD**

(71) Applicant: NTT DOCOMO, INC., Tokyo 100-6150 (JP)
(72) Inventor: ABE, Motohiro, Tokyo 100-6150 (JP); SHIMIZU, Kazuto, Tokyo 100-6150 (JP); TAKAKURA, Tsuyoshi, Tokyo 110-0012 (JP)
(74) Representative: Hoffmann Eitle
(86) International application number: PCT/JP2023/035974
(87) International publication number: WO 2025/074481

(57) **Abstract**

A network node includes: a receiver configured to receive, from a terminal, a registration request for connection for a specific use; and a controller having a function of performing deregistration of a slice identifier that does not have an associated session for a certain period of time, the controller being configured, when the registration request is received, not to perform processing for deregistration of a slice identifier allowed for the terminal.

## Description

### Technical Field

The present invention relates to control of a slice in a network.

### Background Art

In 3GPP (registered trademark) (3rd Generation Partnership Project), in order to realize further increase in system capacities, further increase in data transmission rates, further reduction in delays in radio sections, and the like, a radio communication scheme called 5G or NR (New Radio) (hereinafter, the radio communication scheme is referred to as "5G" or "NR") has been introduced. In 5G, various radio technologies have been introduced in order to satisfy the requirement that the delay in the radio section be less than or equal to 1 ms while achieving a throughput greater than or equal to 10 Gps. Furthermore, studies are also being conducted on 6G, which is a future communication system.

Further, in the 5GC, network slices (also referred to as slices) for a communication operator to provide services to users are operated.

### Citation List

### Non-Patent Literature

[Non-Patent Literature 1] 3GPP TS 23.501 V18.3.0 (2023-09)
[Non-Patent Literature 2] 3GPP TS 23.502 V18.3.0 (2023-09)
[Non-Patent Literature 3] 3GPP TS 24.501 V18.3.0 (2023-06)
[Non-Patent Literature 4] 3GPP TS 29.244 V18.2.1 (2023-06)

### Summary of Invention

### Technical Problem

In relation to a registration procedure in which a terminal performs registration with a network, techniques for performing deregistration of an S-NSSAI (slice identifier) that is registered but not used in a PDU session have been proposed (see, for example, Non-Patent Literatures 1 to 4).

However, in the conventional techniques disclosed in Non-Patent Literatures 1 to 4 and the like, operations relating to timers such as a slice deregistration inactivity timer are unclear, and exceptional operations for emergency calls and the like are also unclear, and thus there is a possibility that deregistration of an S-NSSAI cannot be appropriately performed.

The present invention has been made in view of the above, and an object of the present invention is to provide a technique that makes it possible to appropriately perform deregistration of a slice identifier. Solution to Problem

According to the disclosed technique, there is provided a network node including:
a receiver configured to receive, from a terminal, a registration request for connection for a specific use; and
a controller having a function of performing deregistration of a slice identifier that does not have an associated session for a certain period of time, the controller being configured, when the registration request is received, not to perform processing for deregistration of a slice identifier allowed for the terminal.

### Advantageous Effects of Invention

According to the disclosed technique, a technique is provided that makes it possible to appropriately perform deregistration of a slice identifier.

### Brief Description of Drawings

[Fig. 1] FIG. 1 is a diagram for explaining an example of a communication system;
[Fig. 2] FIG. 2 is a diagram for explaining an example of a communication system in a roaming environment;
[Fig. 3] FIG. 3 is a diagram for explaining an outline of Examples 1 to 4;
[Fig. 4] FIG. 4 is a diagram illustrating an example in which an S-NSSAI associated with a timer is S-NSSAI #1;
[Fig. 5] FIG. 5 is a diagram illustrating association examples (A), (B), and (C);
[Fig. 6] FIG. 6 is a diagram illustrating an image of deleting an S-NSSAI;
[Fig. 7] FIG. 7 is a diagram for explaining an outline of Examples 5 to 7;
[Fig. 8] FIG. 8 is a diagram showing an example of a functional configuration of network nodes 30, 40, and 50 according to an embodiment of the present invention;
[Fig. 9] FIG. 9 is a diagram showing an example of a functional configuration of a terminal 20 according to an embodiment of the present invention;
[Fig. 10] FIG. 10 is a diagram showing an example of a hardware configuration of the network nodes 30, 40, and 50 and the terminal according to an embodiment of the present invention;
[Fig. 11] FIG. 11 is a diagram showing an example of a configuration of a vehicle 2001 in an embodiment of the present invention.

### Description of Embodiments

Hereinafter, an embodiment of the present invention will be described with reference to the drawings. The embodiment described below is an example, and the embodiment to which the present invention is applied is not limited to the following embodiment.

In operation of the radio communication system according to an embodiment of the present invention, existing technologies are used as appropriate. The existing technologies are, for example, existing LTE or existing NR, but are not limited thereto.

First, an example configuration of a 5G network will be described as an example of a network, and then, problems and respective Examples of an operation for solving the problems will be described.

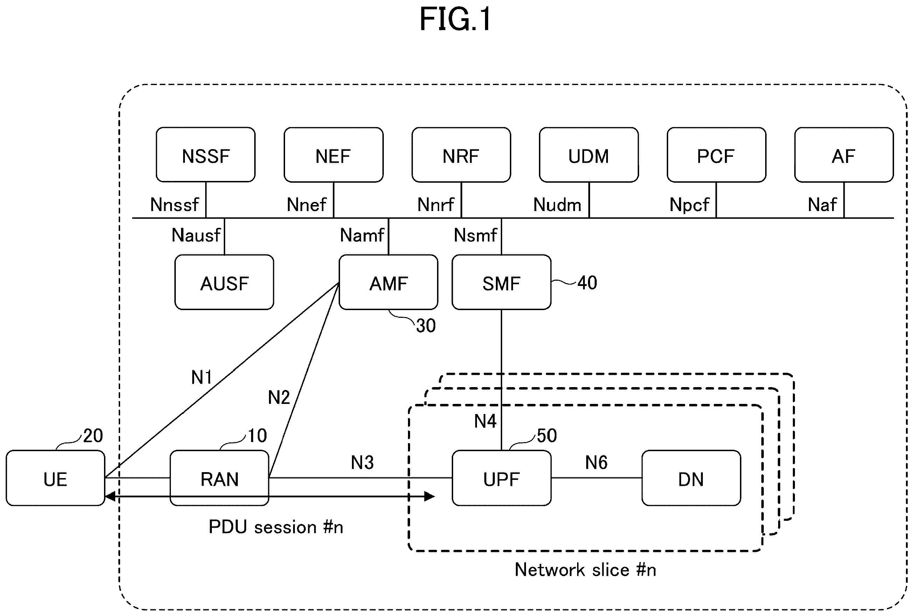

FIG. 1 is a diagram for explaining an example of a communication system corresponding to a mobile network. As shown in FIG. 1, the communication system includes a UE 20 and a plurality of network nodes. Hereinafter, it is assumed that one network node corresponds to each function; however, a single network node may implement a plurality of functions, and a plurality of network nodes may implement a single function. In addition, the "connection" described below may be a logical connection or a physical connection.

A RAN (Radio Access Network) 10 is a network node having a radio access function, which may include the base station and is connected to a UE 20, an AMF (Access and Mobility Management Function) 30, and a UPF (User plane function) 50. The AMF 30 is a network node apparatus having functions of termination of a RAN interface, termination of a NAS (Non-Access Stratum), registration management, connection management, reachability management, mobility management, and the like. The UPF 50 is a network node having functions such as a PDU (Protocol Data Unit) session point for externally interconnecting with a data network (DN), routing and forwarding of packets, and QoS (Quality of Service) handling of a user plane. The UPF and the DN constitute a network slice.

An AMF 30 is connected to a UE 20, a RAN 10, an SMF (Session Management function) 40, an NSSF (Network Slice Selection Function), an NEF (Network Exposure Function), an NRF (Network Repository Function), a UDM (Unified Data Management), a UDR (Unified Data Repository), an AUSF (Authentication Server Function), a PCF (Policy Control Function), and an AF (Application Function). The AMF 30, the SMF 40, the NSSF, the NEF, the NRF, the UDM, the UDR, the AUSF, the PCF, and the AF are network nodes that are interconnected via interfaces Namf, Nsmf, Nnssf, Nnef, Nnrf, Nudm, Nudr, Nausf, Npcf, and Naf based on their respective services.

The SMF 40 is a network node having functions such as session management, IP (Internet Protocol) address assignment and management for a UE 20, a DHCP (Dynamic Host Configuration Protocol) function, an ARP (Address Resolution Protocol) proxy, a roaming function, and the like. The NEF is a network node having a function of notifying other NFs (Network Functions) of capabilities and events. The NSSF is a network node having functions of selecting a network slice to which the UE 20 is connected, determining an allowed NSSAI (Network Slice Selection Assistance Information), determining a configured NSSAI, determining an AMF set to which the UE 20 is connected, and the like. The PCF is a network node having a function of performing policy control of the network. The AF is a network node having a function of controlling the application server. The NRF is a network node having a function of discovering an NF instance that provides a service. The UDM is a network node that manages subscriber data and authentication data. The UDM is connected to a UDR (User Data Repository) that stores the data.

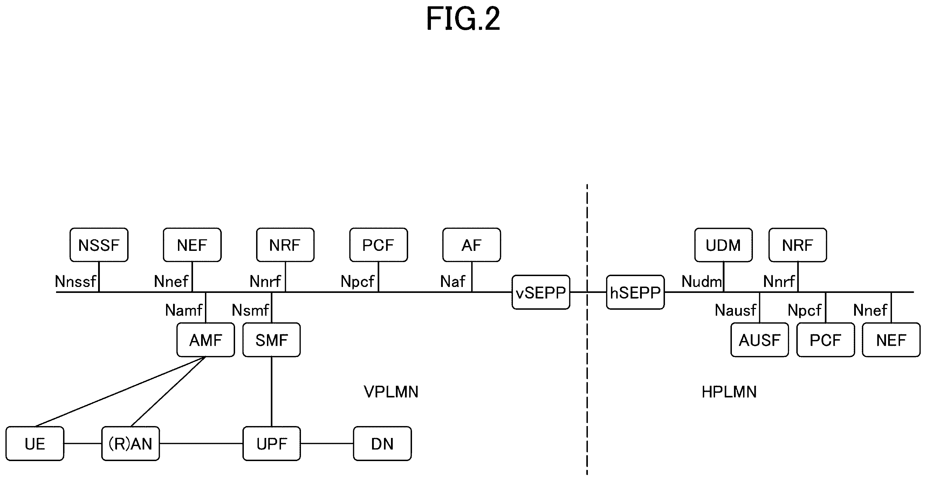

FIG. 2 is a diagram for explaining an example of a communication system in a roaming environment. As shown in FIG. 2, the network is configured by a UE 20 and a plurality of network node apparatuses.

The SEPP is a non-transparent proxy that filters control plane messages between Public Land Mobile Networks (PLMNs). The vSEPP shown in FIG. 2 is the SEPP in the visited network, and the hSEPP is the SEPP in the home network. The UE 20 may be referred to as a terminal 20.

As shown in FIG. 2, the UE 20 is in a roaming environment connected to the RAN and the AMF in a Visited PLMN (VPLMN). The VPLMN and the HPLMN (Home PLMN) are connected via vSEPP and hSEPP. The UE 20 may communicate with the UDM of the HPLMN via the AMF of the VPLMN, for example.

In the present embodiment, the UE 20 and each network node are capable of executing the operations described in existing 3GPP (registered trademark) specifications (e.g., Non-Patent Documents 1 to 4). However, problems exist when only the operations described in the existing specifications are used. The problems will be described below.

### (Regarding the problems)

In the above-described 5G network, slices are operated. S-NSSAI is used for identification of a slice.

As a general processing related to slices, the terminal 20 transmits, by a Registration procedure, a Requested NSSAI including one or more S-NSSAIs for which the terminal desires registration, to the AMF 30. The UE 20 receives, from the AMF 30, an Allowed NSSAI including one or more S-NSSAIs that are allowed to be used in the visited PLMN, and a Configured

### NSSAI.

Further, in a PDU session establishment procedure after the above registration procedure, the UE 20 establishes a PDU session by transmitting, to the AMF 30, a PDU session establishment request including an S-NSSAI indicating a desired slice, and performs communication using the desired slice. Hereinafter, as specific problems, Problem 1 and Problem 2 will be described.

### <Problem 1>

In association with the above registration procedure, a Slice deregistration inactivity timer is defined as a timer for performing deregistration of an S-NSSAI that is registered but not used in a PDU session.

As described in Non-Patent Document 3 and the like, when the UE 20 and the NW support the function of network slice usage control, the AMF 30, for each allowed S-NSSAI that does not have an associated PDU session, starts a Slice deregistration inactivity timer and performs network slice usages monitoring.

For a certain S-NSSAI to be monitored, if the corresponding PDU session is not established and the slice deregistration inactivity timer expires, the AMF 30 deletes the S-NSSAI from the Allowed NSSAI by transmitting a UE Configuration Update Command to the UE 20.

However, in the conventional techniques described in the existing specifications and the like, detailed operations related to the slice deregistration inactivity timer, and detailed operations related to exceptions, are unclear.

In the present embodiment, as detailed operations related to deregistration of an S-NSSAI for solving the above problems, Examples 1 to 4 will be described.

In the above example, the AMF 30 has the slice deregistration inactivity timer and performs the above operations, but the UE 20 may have the slice deregistration inactivity timer and perform the above operations.

Further, performing slice usage control using a timer such as a Slice deregistration inactivity timer may be referred to as "network slice usage control" or "network slice usage monitoring". The term "network slice usage control" may also be referred to as "slice usage control". S-NSSAI and various types of NSSAIs may collectively be referred to as slice identifiers. The term "allowed" means permission for the terminal 20 that desires to use a slice to use the slice.

### <Problem 2>

In relation to the establishment of a PDU session described above, a PDU Session inactivity timer and a User Plane Inactivity Timer are defined as timers that enable stopping the use of a slice for which a PDU session has been established but no data transmission is performed on the user plane. In addition, a PDU session slice usage inactivity timer has been proposed as a timer with a finer granularity.

As described in Non-Patent Document 1 and the like, when the UPF 50 detects that data transmission and reception have stopped, the UPF 50 starts a PDU Session inactivity timer. If the PDU Session inactivity timer expires while there is no data transmission and reception, the UPF 50 notifies the SMF 40 that the PDU Session inactivity timer has expired, and causes the SMF 40 to release the PDU session. Further, if the slice of the released PDU session is not used by another PDU session, the AMF 30 executes a procedure for deleting the slice from the Allowed NSSAI.

Further, as described in Non-Patent Document 4 and the like, when the UPF 50 does not detect traffic for a period indicated by a User Plane Inactivity Timer, it sends a notification to the SMF 40.

However, in the conventional techniques described in the existing specifications and the like, detailed operations related to the above timers are unclear.

In the present embodiment, Examples 5 to 7 will be described as detailed operations related to timers such as a PDU Session inactivity timer, a User Plane Inactivity Timer, and a PDU session slice usage inactivity timer.

In the following description, an Allowed NSSAI is an example of a set of allowed S-NSSAIs, a Rejected NSSAI is an example of a set of rejected S-NSSAIs, a Pending NSSAI is an example of a set of pending (or on-hold) S-NSSAIs, and a Configured NSSAI is an example of a set of configured S-NSSAIs. The number of elements in each set is equal to or greater than zero.

Any plurality of Examples 1 to 7 described below can be implemented in combination.

### (Outline of Examples 1 to 4)

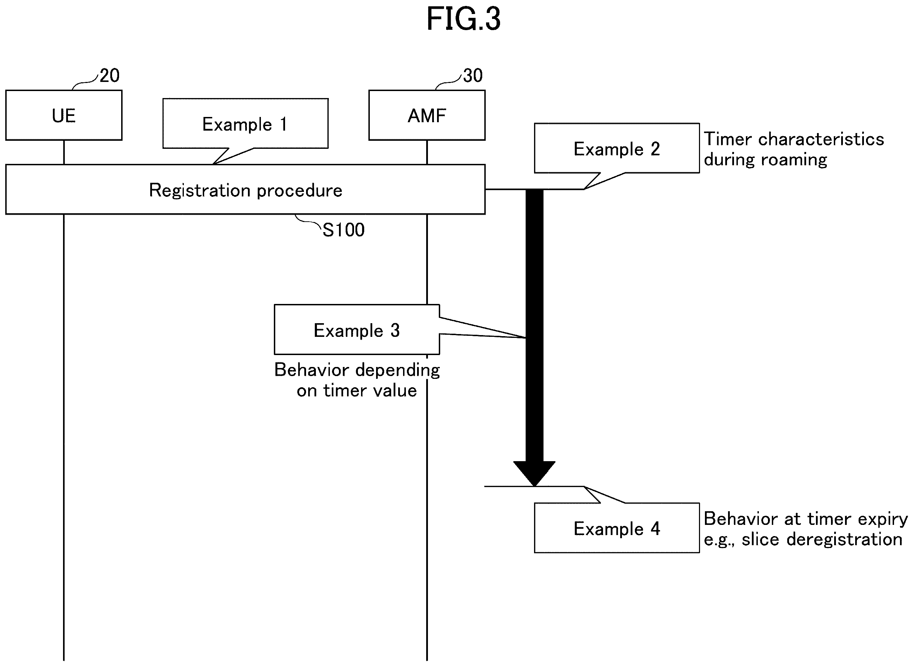

An outline of Examples 1 to 4 will be described with reference to FIG. 3. As shown in FIG. 3, Examples 1 to 4 are examples of operations related to a registration procedure between the UE 20 and the AMF 30. In a registration procedure performed in S100, basically, a Registration request is transmitted from the UE 20 to the AMF 30, and, after processing in the AMF 30, a Registration accept or the like is transmitted from the AMF 30 to the UE 20.

Example 1 is an example relating to an exception of network slice usage control in an emergency call connection or the like. Example 1 is also an example related to a UE capability of "UE configuration of network-controlled Slice Usage Policy".

Example 2 is an example relating to timer characteristics in roaming. Example 3 is an example relating to operations according to a timer value. Example 4 is an example relating to operations at timer expiry.

In Examples 1 to 4, the timer is assumed to be the Slice deregistration inactivity timer; however, the timer is not limited thereto. As the timer in Examples 1 to 4, a timer other than the Slice deregistration inactivity timer may be used.

### (Example 1)

When network slice usage control using a timer is performed and registration of a desired S-NSSAI is deregistered, the UE 20 can no longer perform communication using a desired slice. Such control is undesirable for emergency call connections. Therefore, in Example 1, exception operations of network slice usage control will be described.

Hereinafter, Example 1 will be divided into Example 1-1, Example 1-2, Example 1-3, and Example 1-4 and described.

### <Example 1-1>

Example 1-1 is an example of operations of the UE 20 for notifying the NW of support for a network slice usage control function. Example 1-1 is assumed to be an example of operations relating to emergency call connections, but is not limited to emergency call connections.

More specifically, the UE 20 notifies the NW of its support for the network slice usage control function. The NW is, for example, the AMF 30. More specific operations are as follows.

When the UE 20 supports network slice usage control, the UE 20 sets an NSUC bit to "Network slice usage control supported" in a 5GMM capability IE of a REGISTRATION REQUEST message transmitted to the NW.

However, when the registration request is for an emergency call connection, the UE 20 does not notify "Network slice usage control supported" to the NW. Here, the registration request being for an emergency call connection may be a case where a 5GS registration type IE in the REGISTRATION REQUEST message is set to "emergency registration".

In other words, when the UE 20 supports network slice usage control and the 5GS registration type IE in the REGISTRATION REQUEST message is not set to "emergency registration", the UE 20 sets the NSUC bit in the 5GMM capability IE to "Network slice usage control supported".

### <Example 1-2>

In Example 1-2, operations of the NW in accordance with support for the network slice usage control function will be described. Here, the NW is, for example, the AMF 30. Example 1-2 is assumed to be an example of operations relating to emergency call connections, but is not limited to emergency call connections. Specific operations of the NW are as follows.

When the UE 20 and the NW support network slice usage control, and an S-NSSAI becomes an allowed S-NSSAI (an S-NSSAI allowed for the UE 20) but the UE 20 does not have a PDU session using the S-NSSAI, the AMF 30 executes a slice deregistration inactivity timer for each S-NSSAI and access type, and performs network slice usage monitoring.

When the registration request is for an emergency call connection, the NW does not monitor network slice usage. Specific operations are as follows.

When the NW supports network slice usage control and a 5GS registration type IE transmitted from the UE 20 is set to "emergency registration", even if an S-NSSAI becomes an allowed S-NSSAI and the UE 20 does not have a PDU session using the S-NSSAI, the AMF 30 does not perform network slice usage monitoring "by executing a slice deregistration inactivity timer for each S-NSSAI and access type".

In other words, when the NW supports network slice usage control and the 5GS registration type IE is not set to "emergency registration", and an S-NSSAI becomes an allowed S-NSSAI but the UE 20 does not have a PDU session using the S-NSSAI, the AMF 30 executes a slice deregistration inactivity timer for each S-NSSAI and access type and performs network slice usage monitoring.

Network slice usage monitoring by the AMF 30 may be performed when the UE 20 supports the network slice usage control function. That is, a condition for the AMF 30 to perform network slice usage monitoring may depend on support of the network slice usage control function by the UE. Specific operations are as follows.

When the UE 20 and the NW support network slice usage control and a 5GS registration type IE transmitted from the UE 20 is set to "emergency registration", even if an S-NSSAI becomes an allowed S-NSSAI and the UE 20 does not have a PDU session using the S-NSSAI, the AMF 30 does not perform network slice usage monitoring "by executing a slice deregistration inactivity timer for each S-NSSAI and access type".

In other words, when the UE 20 and the NW support network slice usage control and the 5GS registration type IE is not set to "emergency registration", and an S-NSSAI becomes an allowed S-NSSAI but the UE 20 does not have a PDU session using the S-NSSAI, the AMF 30 executes a slice deregistration inactivity timer for each S-NSSAI and access type and performs network slice usage monitoring.

### <Example 1-3>

Example 1-3 will now be described. In Example 1-3, operations of the UE 20 for notifying the NW of an exception to network slice usage control will be described. Specific operations are as follows. Note that the following operations are not limited to operations related to emergency call connections. The operations may be applied to any use case in which it is desired that an S-NSSAI not be deleted by a timer.

When the UE 20 supports the network slice usage control function and requests prolonging slice registration, the UE 20 indicates, in a REGISTRATION REQUEST message, a request for prolonged S-NSSAI registration (a request for exception handling, that is, a request not to apply network slice usage control). This indication may be an indication that an S-NSSAI usage request is pending.

For example, assume that the UE 20 determines to transmit a registration request for an emergency service (emergency call connection). When the UE 20 starts an initial registration for an emergency service, or when, after completion of the initial registration procedure, it needs to prolong S-NSSAI registration, the UE 20 sets, in the REGISTRATION REQUEST message, an indication for requesting prolonged S-NSSAI registration.

### <Example 1-4>

Example 1-4 will now be described. In Example 1-4, operations of the NW in response to the UE operations of Example 1-3 in an exception of network slice usage control will be described. Here, the NW is, for example, the AMF 30. Specific operations are as follows.

When the UE 20 requests prolonged S-NSSAI registration by a REGISTRATION REQUEST message, the AMF 30 does not immediately delete the S-NSSAI from the Allowed NSSAI when a timer (for example, a Slice deregistration inactivity timer) expires. The expression "does not immediately delete the S-NSSAI" may also mean "does not delete the S-NSSAI". Detailed operations at the time of timer expiry will be described in Example 4.

The above example is a method in which a network slice usage control timer is started and an exceptional treatment is performed in control occurring at timer expiry. In addition to such a method, an exceptional treatment may be realized by not starting the network slice usage control timer itself. Specific operations are as follows.

When the UE 20 requests prolonged S-NSSAI registration in a REGISTRATION REQUEST message, the AMF 30 does not start a timer (for example, a Slice deregistration inactivity timer).

### <Effects of Example 1>

According to Example 1, it is possible to not apply network slice usage control as an exception, even when conditions for executing network slice usage control are satisfied.

### (Example 2)

Example 2 will now be described. In network slice usage control in the conventional techniques, it is unclear which S-NSSAI a timer is associated with. Therefore, in the conventional techniques, it may not be possible to appropriately perform network slice usage control for a desired S-NSSAI. Thus, in Example 2, operations of the NW relating to association between a timer and an S-NSSAI will be described. Here, the NW is, for example, the AMF 30.

Specifically, the NW starts a timer by the following operations. Here, the timer is, for example, a slice deregistration inactivity timer. Further, the AMF 30 can determine, from information received from the UE 20 (for example, a registration request), information received from the SMF 40, or information received from a network node other than the SMF 40, whether the UE 20 is registered in an HPLMN or registered in a VPLMN for the UE 20. Note that the HPLMN may also be referred to as a home network, and the VPLMN may also be referred to as a visited network.

When the UE 20 and the NW support network slice usage control, and an S-NSSAI becomes an allowed S-NSSAI but the UE 20 does not have a PDU session using the S-NSSAI, the AMF 30 executes a slice deregistration inactivity timer for each S-NSSAI and access type, and performs network slice usage monitoring. The slice deregistration inactivity timer is started when the S-NSSAI is not used by any PDU session in the corresponding access type.

Operation examples in which the NW determines an S-NSSAI to be associated with a timer will be described below.

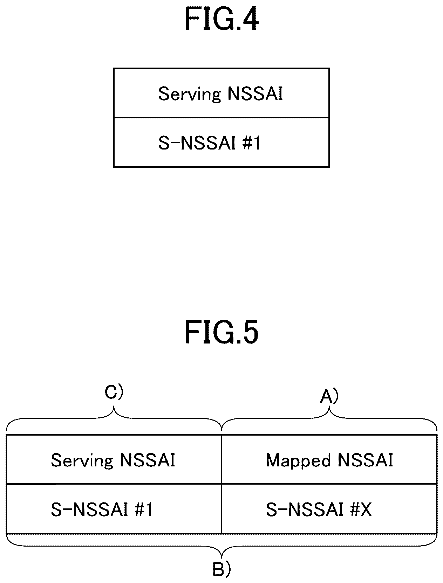

When the UE 20 is registered (slice-registered) in an HPLMN, the NW regards an S-NSSAI associated with a timer as an S-NSSAI included in an Allowed NSSAI (in a UE context). That is, the NW associates a timer used for slice usage control with an S-NSSAI included in an Allowed NSSAI in the HPLMN. FIG. 4 shows an example in which an S-NSSAI associated with a timer is S-NSSAI #1. Note that a Serving NSSAI is an NSSAI (a set of S-NSSAIs) specific to a PLMN in which the UE 20 is located.

As operation examples when the UE 20 is registered (slice-registered) in a VPLMN, there are the following operations (A) to (C).
(A) When the UE 20 is registered (slice-registered) in a VPLMN, the NW regards an S-NSSAI associated with a timer as a mapped S-NSSAI included in an Allowed NSSAI (in a UE context). The mapped S-NSSAI when the UE 20 is registered in a VPLMN is an S-NSSAI of the HPLMN that is associated (mapped) to the S-NSSAI in the VPLMN.
(B) When the UE 20 is registered (slice-registered) in a VPLMN, the NW regards an S-NSSAI associated with a timer as a combination of an S-NSSAI and a mapped S-NSSAI included in an Allowed NSSAI (in a UE context). The combination of an S-NSSAI and a mapped S-NSSAI may be expressed as [S-NSSAI, mapped S-NSSAI]. The S-NSSAI in [S-NSSAI, mapped S-NSSAI] is an S-NSSAI of a Serving NSSAI. That is, the S-NSSAI is an S-NSSAI of the VPLMN, and the mapped S-NSSAI is an S-NSSAI of the HPLMN that is mapped to the S-NSSAI.

It is possible to map S-NSSAI #X of the HPLMN to a plurality of S-NSSAIs (for example, S-NSSAI #1, S-NSSAI #2, and S-NSSAI #3) in the VPLMN. By the operation (B), it is possible to specify which mapping among a plurality of mappings a timer is applied to.

(C) When the UE 20 is registered (slice-registered) in a VPLMN, the NW regards an S-NSSAI associated with a timer as a serving S-NSSAI included in an Allowed NSSAI (in a UE context).

FIG. 5 illustrates the above-described operations (A), (B), and (C).

### <Effects of Example 2>

According to Example 2, it is possible to clarify an S-NSSAI to be associated with a timer and, as a result, appropriately perform network slice usage control.

### (Example 3)

Example 3 will now be described. In network slice usage control in the conventional techniques, operations according to a timer value are unclear. Therefore, in the conventional techniques, it may not be possible to appropriately perform network slice usage control according to a timer value. Thus, in Example 3, operations according to a timer value set in a timer will be described.

Below, operations of the NW will be described as Example 3-1, and operations of the UE 20 will be described as Example 3-2. Here, the NW is, for example, the AMF 30.

### <Example 3-1>

In Example 3-1, the NW (the AMF 30) performs network slice usage control according to a timer value as follows. Here, the timer is, for example, a slice deregistration inactivity timer.

The AMF 30 receives a new timer value from a UDM or a PCF. Alternatively, in the AMF 30, a timer value is set and updated as an AMF local setting or an AMF local policy.

When the timer value is neither "0" nor "deactivated", the AMF 30 stops the timer if a timer count is running, and then starts the timer with a value locally set in the AMF 30 or with a value received from the UDM and/or the PCF.

When the timer value is "0" or "deactivated", the AMF 30 stops the timer if a timer count is running, and immediately executes deregistration (slice deregistration) of a slice corresponding to the timer. Detailed processing related to slice deregistration will be described in Example 4.

Further, the following operation may be performed. When the timer value is "deactivated", the AMF 30 stops the timer if a timer count is running. The value "deactivated" means that an associated S-NSSAI is no longer a monitoring target.

### <Example 3-2>

In Example 3-2, the UE 20 performs network slice usage control according to a timer value as follows. Here, the timer may be a slice deregistration inactivity timer.

The UE 20 receives a new timer value from the AMF 30. When the timer value is neither "0" nor "deactivated", the UE 20 stops the timer if a timer count is running, and then starts the timer with the value received from the AMF 30.

When the timer value is "0" or "deactivated", the UE 20 stops the timer if a timer count is running, and immediately executes deregistration (slice deregistration) of a slice corresponding to the timer. Detailed processing related to slice deregistration will be described in Example 4.

Further, the following operation may be performed. When the timer value is "deactivated", the UE 20 stops the timer if a timer count is running. The value "deactivated" means that an associated S-NSSAI is no longer a monitoring target.

### <Effects of Example 3>

According to Example 3, it is possible to clarify operations according to a timer value and, as a result, appropriately perform network slice usage control.

### (Example 4)

Example 4 will now be described. In Example 4, operations related to slice deregistration performed when a timer expires will be described. In the conventional techniques, as operations related to slice deregistration, only an operation of deleting an S-NSSAI whose timer has expired from an Allowed NSSAI is defined. However, in such conventional techniques, it is difficult to perform flexible control. Thus, in Example 4, various operations will be described, which are not limited to an operation of deleting an S-NSSAI whose timer has expired from an Allowed NSSAI.

Below, as specific operation examples, Examples 4-1 to 4-13 will be described.

### <Example 4-1>

In Example 4-1, an operation example related to slice deregistration performed in the NW when a timer expires will be described. The timer is, for example, a slice deregistration inactivity timer. S-NSSAI(s) indicates one or more S-NSSAIs. The NW is, for example, the AMF 30.

When the timer expires, the AMF 30 executes slice deregistration for an S-NSSAI as follows. Cases 1 to 3 will be described below.

### [Case 1]

The AMF 30 locally deletes, from an Allowed NSSAI, S-NSSAI(s) whose associated timer has expired. Further, the AMF 30 includes, in the Allowed NSSAI, allowed S-NSSAI(s) that do not have an associated timer or that have an associated timer which has not yet expired. The Allowed NSSAI may be included, for example, in a REGISTRATION ACCEPT message or a CONFIGURATION UPDATE COMMAND message transmitted to the UE 20.

### [Case 2]

When timers for all S-NSSAIs included in an Allowed NSSAI have expired, the AMF 30 locally deletes S-NSSAI(s) whose associated timer has expired from the Allowed NSSAI. Further, in order to indicate that all S-NSSAIs included in the Allowed NSSAI are subject to deletion, the AMF 30 includes, in a REGISTRATION ACCEPT message or a CONFIGURATION UPDATE COMMAND message transmitted to the UE 20, a "slice usage control" indication set to "slice usage is enabled", and/or an empty Allowed NSSAI.

### [Case 3]

When the AMF 30 detects that a removed S-NSSAI in an Allowed NSSAI is the last S-NSSAI in the Allowed NSSAI, the AMF 30 uses a REGISTRATION ACCEPT message or a CONFIGURATION UPDATE COMMAND message to notify/instruct the UE 20 of this situation, and causes the UE 20 to use a default configured S-NSSAI in a subsequent procedure.

Further, the following operation may be performed. The AMF 30 adds a default configured S-NSSAI to an Allowed NSSAI, and transmits the default configured S-NSSAI to the UE 20 using a REGISTRATION ACCEPT message or a CONFIGURATION UPDATE COMMAND message.

### <Example 4-2>

In Example 4-2, operations of the UE 20 when receiving a slice deregistration indication from the NW performing the operations of Example 4-1 will be described. The UE 20 performs operations according to a slice deregistration indication as follows. The Cases 1 to 3 below correspond to the Cases 1 to 3 in Example 4-2.

### [Case 1]

Upon receiving a new Allowed NSSAI for a PLMN or an SNPN, the UE 20 performs an NSSAI storage update as specified, for example, in Non-Patent Document 3 (4.6.2.2). For example, the UE 20 sets S-NSSAI(s) to be included in an Allowed NSSAI to S-NSSAI(s) of the new Allowed NSSAI that has been received.

### [Case 2]

Upon receiving a "slice usage control" indication and/or an empty Allowed NSSAI, the UE 20 deletes, from its own Allowed NSSAI, all stored S-NSSAI(s) and mapped S-NSSAI(s) for the S-NSSAI(s). If, as a result of the deletion, the UE 20 has neither an Allowed NSSAI nor a configured NSSAI for the current PLMN, the UE 20 uses a default configured NSSAI for a subsequent registration procedure.

### [Case 3]

Upon receiving the indication/information, the UE 20 performs registration using a default configured S-NSSAI. Here, the indication/information may be an indication/information indicating that a removed S-NSSAI in the Allowed NSSAI is the last S-NSSAI in the Allowed NSSAI.

### <Example 4-3>

In Example 4-3, an operation example related to slice deregistration performed in the NW when a timer expires will be described. The NW is, for example, the AMF 30. The timer is, for example, a slice deregistration inactivity timer. In Example 4-3, an S-NSSAI is deleted from an Allowed NSSAI, and the S-NSSAI is further made into a Rejected NSSAI. Note that deletion from the Allowed NSSAI is performed in all of the Examples described in Example 4.

When the timer expires, the AMF 30 executes slice deregistration for an S-NSSAI as follows. Cases 1 to 3 will be described below.

### [Case 1]

The AMF 30 locally includes S-NSSAI(s) whose associated timer has expired in a rejected NSSAI (or an extended rejected NSSAI). Further, in a REGISTRATION ACCEPT message or a CONFIGURATION UPDATE COMMAND message transmitted to the UE 20, the AMF 30 includes the S-NSSAI(s) whose associated timer has expired in a rejected NSSAI (or an extended rejected NSSAI).

Note that the term "rejected NSSAI" may, in its meaning, include "extended rejected NSSAI". Further, "to include S-NSSAI(s) whose associated timer has expired in a rejected NSSAI (or an extended rejected NSSAI) in a REGISTRATION ACCEPT message or a CONFIGURATION UPDATE COMMAND message" also means "to include, in a REGISTRATION ACCEPT message or a CONFIGURATION UPDATE COMMAND message, S-NSSAI(s) whose associated timer has expired, which are included in a rejected NSSAI (or an extended rejected NSSAI)". The same applies to subsequent REGISTRATION ACCEPT messages or CONFIGURATION UPDATE COMMAND messages.

### [Case 2]

When timers for all S-NSSAIs included in an Allowed NSSAI have expired, the AMF 30 locally includes S-NSSAI(s) whose associated timer has expired in a rejected NSSAI (or an extended rejected NSSAI). Further, in a REGISTRATION ACCEPT message or a CONFIGURATION UPDATE COMMAND message, the AMF 30 includes those S-NSSAI(s) in a rejected NSSAI (or an extended rejected NSSAI). Note that an S-NSSAI marked as a default configured NSSAI is not targeted for slice usage control. In other words, the AMF 30 need not perform monitoring for slice usage control for a default configured NSSAI.

### [Case 3]

So far, operations of the AMF 30 for performing slice deregistration have been described. In Case 3, operations of the AMF 30 for enabling reuse of S-NSSAI(s) for which slice deregistration has been performed will be described after slice deregistration has been performed by the above-described processing. Specifically, in order to make S-NSSAI(s) included in a rejected NSSAI (or an extended rejected NSSAI) by slice deregistration available for use again, the AMF 30 performs the following operations.

In a REGISTRATION ACCEPT message or a CONFIGURATION UPDATE COMMAND message transmitted to the UE 20, the AMF 30 does not include S-NSSAI(s) in a rejected NSSAI (or an extended rejected NSSAI), and includes, in the REGISTRATION ACCEPT message or the CONFIGURATION UPDATE COMMAND message, a "slice usage control" indication that is not set to "slice usage control is enabled".

Note that the NW may perform the operations of Example 4-3 in combination with the operations of Example 4-1. For example, the AMF 30 may perform the following operations.

The AMF 30 includes S-NSSAI(s) whose associated timer has expired in a rejected NSSAI (or an extended rejected NSSAI), and further includes, in an Allowed NSSAI, other allowed S-NSSAI(s) that do not have an associated timer or that have an associated timer which has not yet expired. Further, the AMF 30 may perform the following operations.

When timers for all S-NSSAIs included in an Allowed NSSAI have expired, in order to indicate that all S-NSSAIs included in the Allowed NSSAI are subject to deletion, the AMF 30 includes, in a REGISTRATION ACCEPT message or a CONFIGURATION UPDATE COMMAND message transmitted to the UE 20, a slice usage control indication set to "slice usage is enabled" and/or an empty Allowed NSSAI, together with S-NSSAI(s) in a rejected NSSAI (or an extended rejected NSSAI) whose timer has expired, which have been included in the Allowed NSSAI.

### <Example 4-4>

In Example 4-4, operations of the UE 20 when receiving a slice deregistration indication from the NW performing the operations of Example 4-3 will be described. The UE 20 performs operations according to a slice deregistration indication as follows. The Cases 1 to 3 below correspond to the Cases 1 to 3 in Example 4-3.

### [Case 1]

When the UE 20 receives S-NSSAI(s) included in a rejected NSSAI (or an extended rejected NSSAI), the UE 20 executes an NSSAI storage update as specified in Non-Patent Document 3 (4.6.2.2). For example, the UE 20 sets S-NSSAI(s) to be included in a rejected NSSAI to S-NSSAI(s) of the received rejected NSSAI.

### [Case 2]

When the UE 20 receives S-NSSAI(s) included in a rejected NSSAI (or an extended rejected NSSAI), the UE 20 executes an NSSAI storage update as specified in Non-Patent Document 3 (4.6.2.2). For example, the UE 20 sets S-NSSAI(s) to be included in a rejected NSSAI to S-NSSAI(s) of the received rejected NSSAI. Further, when the UE 20 has neither an Allowed NSSAI nor a configured NSSAI for the current PLMN, the UE 20 uses a default configured NSSAI for a subsequent registration procedure.

### [Case 3]

When, in a received REGISTRATION ACCEPT message or CONFIGURATION UPDATE COMMAND message, an S-NSSAI is not included in a rejected NSSAI (or an extended rejected NSSAI), and a "slice usage control" indication is not set to "slice usage control is enabled", the UE 20 deletes all (any) S-NSSAI(s) in a rejected NSSAI having a corresponding cause value for the current PLMN. By deleting S-NSSAI(s) from a rejected NSSAI, the S-NSSAI(s) are made available for reuse.

### <Example 4-5>

In Example 4-5, an operation example related to slice deregistration performed in the NW when a timer expires will be described. The NW is, for example, the AMF 30. The timer is, for example, a slice deregistration inactivity timer. In Example 4-5, an S-NSSAI is deleted from an Allowed NSSAI, and the S-NSSAI is further made into a Pending NSSAI.

When the timer expires, the AMF 30 executes slice deregistration for an S-NSSAI as follows. Cases 1 to 3 will be described below.

### [Case 1]

The AMF 30 locally includes S-NSSAI(s) whose associated timer has expired in a pending NSSAI. Further, in a REGISTRATION ACCEPT message or a CONFIGURATION UPDATE COMMAND message transmitted to the UE 20, the AMF 30 includes S-NSSAI(s) whose associated timer has expired in a pending NSSAI.

### [Case 2]

When timers for all S-NSSAIs included in an Allowed NSSAI have expired, the AMF 30 locally includes S-NSSAI(s) whose associated timer has expired in a pending NSSAI. Further, in a REGISTRATION ACCEPT message or a CONFIGURATION UPDATE COMMAND message, the AMF 30 includes those S-NSSAI(s) in a pending NSSAI.

### [Case 3]

So far, operations of the AMF 30 for performing slice deregistration have been described. In Case 3, operations of the AMF 30 for enabling reuse, after slice deregistration has been performed, of S-NSSAI(s) for which slice deregistration has been performed will be described. Specifically, in order to make S-NSSAI(s) included in a pending NSSAI by slice deregistration available for use again, the AMF 30 performs the following operations.

In a REGISTRATION ACCEPT message or a CONFIGURATION UPDATE COMMAND message transmitted to the UE 20, the AMF 30 does not include S-NSSAI(s) in a pending NSSAI, and includes, in the REGISTRATION ACCEPT message or the CONFIGURATION UPDATE COMMAND message, a "slice usage control" indication that is not set to "slice usage control is enabled".

The following operation may also be performed. In a REGISTRATION ACCEPT message or a CONFIGURATION UPDATE COMMAND message, the AMF 30 includes a timer associated with an S-NSSAI in a Pending NSSAI. The timer defines a duration until the S-NSSAI in the Pending NSSAI becomes available for use.

Note that the NW may perform the operations of Example 4-5 in combination with the operations of Example 4-1. For example, the AMF 30 may perform the following operations.

The AMF 30 includes S-NSSAI(s) whose associated timer has expired in a pending NSSAI, and further includes, in an Allowed NSSAI, other allowed S-NSSAI(s) that do not have an associated timer or that have an associated timer which has not yet expired. Further, the AMF 30 may perform the following operations.

When timers for all S-NSSAIs included in an Allowed NSSAI have expired, in order to indicate that all S-NSSAIs included in the Allowed NSSAI are subject to deletion, the AMF 30 includes, in a REGISTRATION ACCEPT message or a CONFIGURATION UPDATE COMMAND message transmitted to the UE 20, a slice usage control indication set to "slice usage is enabled" and/or an empty Allowed NSSAI, together with "S-NSSAI(s) in a pending NSSAI whose timer has expired, which have been included in the Allowed NSSAI".

### <Example 4-6>

In Example 4-6, operations of the UE 20 when receiving a slice deregistration indication from the NW performing the operations of Example 4-5 will be described. The UE 20 performs operations according to a slice deregistration indication as follows. The Cases 1 to 3 below correspond to the Cases 1 to 3 in Example 4-5.

### [Cases 1 and 2]

When the UE 20 receives S-NSSAI(s) included in a pending NSSAI, the UE 20 executes NSSAI storage update as specified in Non-Patent Document 3 (4.6.2.2). For example, the UE 20 sets S-NSSAI(s) to be included in a pending NSSAI to S-NSSAI(s) of the received pending

### NSSAI.

### [Case 3]

When, in a REGISTRATION ACCEPT message or a CONFIGURATION UPDATE COMMAND message, an S-NSSAI is not included in a pending NSSAI, and a "slice usage control" indication is not set to "slice usage control is enabled", the UE 20 deletes all (any) S-NSSAI(s) in a pending NSSAI for the current PLMN. Further, the UE 20 may perform the following operations.

Upon receiving a timer, the UE 20 starts a timer for each S-NSSAI in a Pending NSSAI. While the timer value is not "0" and the timer is running, the UE 20 is not allowed to use those S-NSSAI(s) until the timer expires. When the timer value is not "0" and the timer expires, the UE 20 is allowed to use those S-NSSAI(s). When the timer value is "0", the UE 20 is allowed to use those S-NSSAI(s).

### <Example 4-7>

In Example 4-7, an operation example related to slice deregistration performed in the NW when a timer expires will be described. The timer is, for example, a slice deregistration inactivity timer. The NW is, for example, the AMF 30. In Example 4-7, an S-NSSAI is deleted from an Allowed NSSAI, and the S-NSSAI is further deleted from a Configured NSSAI. When the timer expires, the AMF 30 executes slice deregistration for an S-NSSAI as follows.

The AMF 30 locally deletes S-NSSAI(s) whose associated timer has expired from a configured NSSAI. Further, the AMF 30 includes, in the configured NSSAI, S-NSSAI(s) excluding S-NSSAI(s) whose associated timer has expired. The configured NSSAI may be included, for example, in a REGISTRATION ACCEPT message or a CONFIGURATION UPDATE COMMAND message transmitted to the UE 20.

Note that the NW may perform the operations of Example 4-7 in combination with the operations of Example 4-1. For example, the AMF 30 may perform the following operations.

The AMF 30 includes, in a configured NSSAI, S-NSSAI(s) excluding S-NSSAI(s) whose associated timer has expired, and further includes, in an Allowed NSSAI, allowed S-NSSAI(s) that do not have an associated timer or that have an associated timer which has not yet expired.

### <Example 4-8>

In Example 4-8, operations of the UE 20 when receiving a slice deregistration indication from the NW performing the operations of Example 4-7 will be described. The UE 20 performs operations according to a slice deregistration indication as follows.

When the UE 20 is configured with a new configured NSSAI for a PLMN, and when the UE 20 receives, by the same CONFIGURATION UPDATE COMMAND message, the new configured NSSAI for the PLMN and a Configuration update indication IE having a Registration requested bit that is not set to "registration requested", the UE 20 deletes S-NSSAI(s) of an Allowed NSSAI that are not included in the new configured NSSAI, and/or deletes stored mapped S-NSSAI(s) for the Allowed NSSAI (if any).

### <Example 4-9>

In Example 4-9, operations of the UE 20 when a timer operating based on a timer value received from the NW performing the operations of Example 3 expires will be described. Specifically, the UE 20 performs the following operations.

When the timer expires, the UE 20 may locally delete an S-NSSAI from an Allowed NSSAI (Non-Patent Document 1, 5.15.15.2 UE Configuration of network-controlled Slice Usage Policy).

### <Example 4-10>

In Example 4-10, operations of the UE 20 when a timer operating based on a timer value received from the NW performing the operations of Example 3 expires will be described. Specifically, the UE 20 performs the following operations.

When the timer expires, the UE 20 executes slice deregistration for an S-NSSAI as follows. Cases 1 to 2 will be described below.

### [Case 1]

The UE 20 locally includes S-NSSAI(s) whose associated timer has expired in a rejected NSSAI (or an extended rejected NSSAI).

### [Case 2]

When timers for all S-NSSAIs included in an Allowed NSSAI have expired, the UE 20 locally includes S-NSSAI(s) whose associated timer has expired in a rejected NSSAI (or an extended rejected NSSAI). Further, when the UE 20 has neither an Allowed NSSAI nor a configured NSSAI for the current PLMN, the UE 20 uses a default configured NSSAI for a subsequent registration procedure.

Note that the UE 20 may perform the operations of Example 4-10 in combination with the operations of Example 4-9. For example, the UE 20 may perform the following operations.

The UE 20 locally includes S-NSSAI(s) whose associated timer has expired in a rejected NSSAI (or an extended rejected NSSAI), and locally deletes S-NSSAI(s) whose associated timer has expired from an Allowed NSSAI.

### <Example 4-11>

In Example 4-11, operations of the UE 20 when a timer operating based on a timer value received from the NW performing the operations of Example 3 expires will be described. Specifically, the UE 20 performs the following operations.

When the timer expires, the UE 20 executes slice deregistration for an S-NSSAI as follows. Cases 1 and 2 will be described below.

### [Case 1]

The UE 20 locally includes S-NSSAI(s) whose associated timer has expired in a pending NSSAI.

### [Case 2]

When timers for all S-NSSAIs included in an Allowed NSSAI have expired, the UE 20 locally includes S-NSSAI(s) whose associated timer has expired in a pending NSSAI. Further, when the UE 20 has neither an Allowed NSSAI for the current PLMN nor a configured NSSAI for the current PLMN, the UE 20 uses a default configured NSSAI for a subsequent registration procedure.

Note that the UE 20 may perform the operations of Example 4-11 in combination with the operations of Example 4-9. For example, the UE 20 may perform the following operations.

The UE 20 locally includes S-NSSAI(s) whose associated timer has expired in a pending NSSAI, and locally deletes S-NSSAI(s) whose associated timer has expired from an Allowed NSSAI.

### <Example 4-12>

In Example 4-12, operations of the UE 20 when a timer operating based on a timer value received from the NW performing the operations of Example 3 expires will be described. Specifically, the UE 20 performs the following operations.

When the timer expires, the UE 20 executes slice deregistration for an S-NSSAI as follows. Cases 1 and 2 will be described below.

### [Case 1]

The UE 20 locally deletes S-NSSAI(s) whose associated timer has expired from a configured NSSAI.

### [Case 2]

When timers for all S-NSSAIs included in an Allowed NSSAI have expired, the UE 20 locally deletes S-NSSAI(s) whose associated timer has expired from a configured NSSAI. Further, when the UE 20 has neither an Allowed NSSAI for the current PLMN nor a configured NSSAI for the current PLMN, the UE 20 uses a default configured NSSAI for a subsequent registration procedure.

Note that the UE 20 may perform the operations of Example 4-12 in combination with the operations of Example 4-9. For example, the UE 20 may perform the following operations.

The UE 20 locally deletes S-NSSAI(s) whose associated timer has expired from a configured NSSAI, and locally deletes S-NSSAI(s) whose associated timer has expired from an Allowed NSSAI.

### <Example 4-13>

In Example 4-13, operations of the NW related to slice usage control when the UE 20 does not request an S-NSSAI in a registration procedure, or when there is no S-NSSAI that can be allowed for the UE 20, will be described. Specific operations are as follows. The NW is, for example, the AMF 30.

When the UE 20 does not include an S-NSSAI in a requested NSSAI in a transmitted REGISTRATION REQUEST message, or when none of S-NSSAIs in the requested NSSAI in the REGISTRATION REQUEST message are allowed, the NW does not include S-NSSAI(s) subject to network slice usage control (or S-NSSAI(s) subject to execution of a deregistration inactivity timer) in an Allowed NSSAI. This causes the NW not to perform monitoring for network slice usage control.

Here, the AMF 30 can determine, based on subscription data, whether an S-NSSAI is subject to network slice usage control. Specifically, when a timer is associated with S-NSSAI(s) in subscription data, the AMF 30 determines that the S-NSSAI(s) are subject to network slice usage control. Here, the timer is, for example, a deregistration inactivity timer.

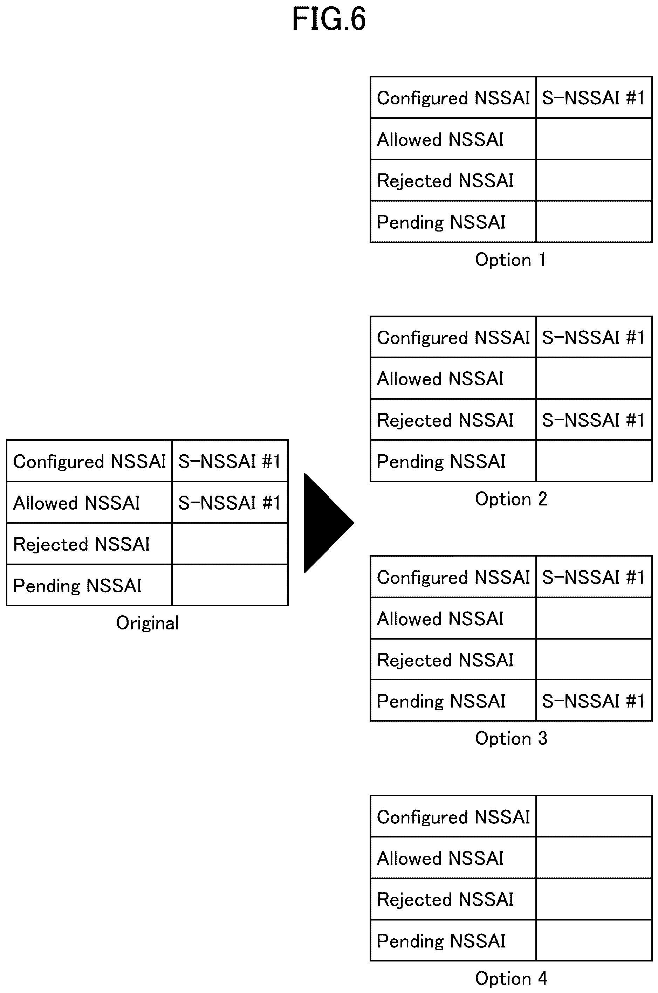

All of the Examples in Example 4 have been described above. FIG. 6 illustrates an image of deleting S-NSSAI(s) in Example 4. In FIG. 6, Option 1 indicates deleting an S-NSSAI from an Allowed NSSAI. In addition to deletion of an S-NSSAI from an Allowed NSSAI, Options 2 and 3 respectively indicate including an S-NSSAI in a Rejected NSSAI and in a Pending NSSAI. Option 4 indicates deleting an S-NSSAI from an Allowed NSSAI and further deleting the S-NSSAI from a Configured NSSAI. As described above, when an S-NSSAI is included in a Rejected NSSAI, a Pending NSSAI, or the like, it is possible to restore a deleted S-NSSAI as described in Case 3.

### <Effects of Example 4>

According to Example 4, various operations when a timer expires are clarified and, as a result, network slice usage control can be appropriately executed.

### (Outline of Examples 5 to 7)

As described in Problem 2 above, in the conventional techniques described in the existing specifications and the like, detailed operations related to timers such as a PDU Session inactivity timer, a User Plane Inactivity Timer, and a PDU session slice usage inactivity timer are unclear. In Examples 5 to 7, operations of network nodes (specifically, the SMF 40 and the UPF 50) for solving Problem 2 will be described. Note that a User Plane may be denoted as UP.

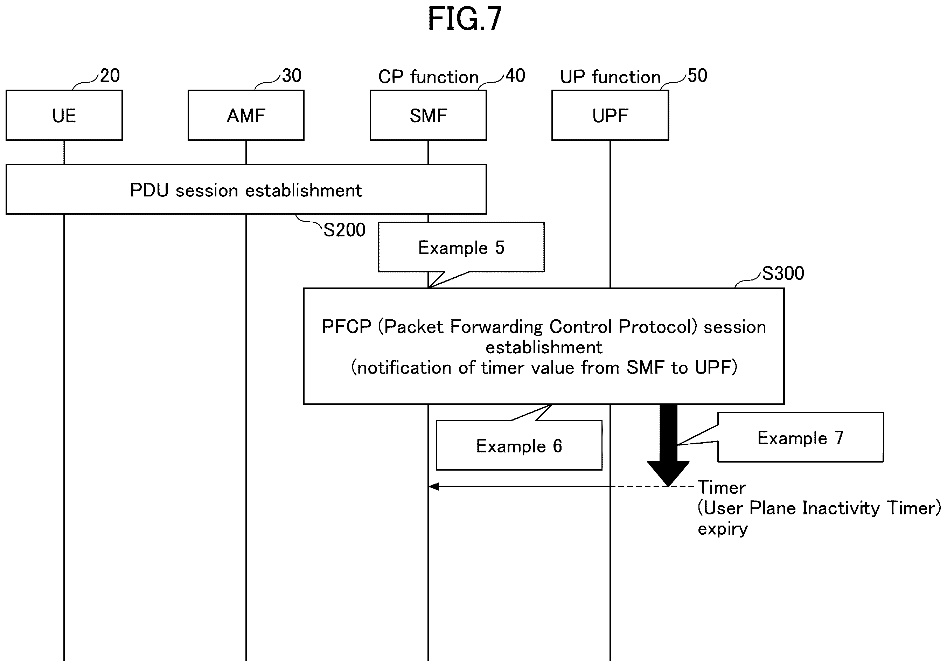

An outline of Examples 5 to 7 will be described with reference to FIG. 7. A timer used in the following description may be a User Plane Inactivity Timer, a PDU session slice usage inactivity timer, or a timer other than these timers.

In S200, a procedure for establishing a PDU session used by the UE 20 is executed. In S300, a procedure for establishing a PFCP (Packet Forwarding Control Protocol) session, which is a session between the SMF 40 and the UPF 50, is executed. At this time, a timer value is notified from the SMF 40 to the UPF 50 (Non-Patent Document 4).

That is, the SMF 40 (also referred to as a CP function) notifies the UPF 50 (also referred to as a UP function) of a timer value, thereby requesting that the UPF 50 reports to the SMF 40 when it detects that there is no transmission and reception of user plane data (packets).

Further, the UPF 50 that has received the timer value monitors user plane traffic and, if it does not receive traffic for a period of the timer value, reports to the SMF 40. As a result, the SMF 40 can stop use of a slice for which a PDU session has been established but there is no data transmission and reception on the user plane.

Example 5 is an Example regarding NSSAI information specified by the SMF 40 when the SMF 40 instructs the UPF 50 to perform monitoring (specifically, UP inactivity monitoring). Example 6 is an Example regarding an S-NSSAI with which a timer is associated in the UPF 50. Example 7 is an Example regarding operations according to a timer value.

### (Example 5)

In conventional techniques, it is unclear which S-NSSAI is specified when UP inactivity monitoring is notified from the SMF 40 to the UPF 50. Therefore, in conventional UP inactivity monitoring, it may not be possible to appropriately perform UP inactivity monitoring for a slice.

Thus, in Example 5, operations of the SMF 40 for notifying the UPF 50 of S-NSSAI information for performing UP inactivity monitoring will be described. Specific operations are as follows.

A CP function (the SMF 40) provides an S-NSSAI IE to a UP function (the UPF 50) for UP inactivity monitoring. The S-NSSAI IE is included in a PFCP Session Establishment Request message. As variations of the S-NSSAI IE included in the message by the SMF 40, there are the following. Note that, in Examples 5 and 6, a PDU session establishment message (UL NAS transport message) shown below is one example of a message for notifying an S-NSSAI, and the relevant S-NSSAI may be included in a message other than this message.

When the UE 20 is registered (slice-registered) in an HPLMN, the SMF 40 regards an S-NSSAI included in the S-NSSAI IE as an S-NSSAI (an S-NSSAI of the HPLMN) included in a PDU session establishment message (UL NAS transport message). An example in which an S-NSSAI included in the S-NSSAI IE is S-NSSAI #1 is the same as that shown in FIG. 4 described above.

As operation examples when the UE 20 is registered (slice-registered) in a VPLMN, there are the following operations (A) to (C).
(A) When the UE 20 is registered (slice-registered) in a VPLMN, the SMF 40 regards an S-NSSAI to be included in the S-NSSAI IE as a mapped S-NSSAI included in a PDU session establishment message (UL NAS transport message).
(B) When the UE 20 is registered (slice-registered) in a VPLMN, the SMF 40 regards an S-NSSAI to be included in the S-NSSAI IE as both a serving S-NSSAI and a mapped S-NSSAI (a combination) included in a PDU session establishment message (UL NAS transport message). The combination may be expressed as [S-NSSAI, mapped S-NSSAI].
(C) When the UE 20 is registered (slice-registered) in a VPLMN, the SMF 40 regards an S-NSSAI to be included in the S-NSSAI IE as a serving S-NSSAI included in a PDU session establishment message (UL NAS transport message).

FIG. 5 described above illustrates the operations (A), (B), and (C) described above.

### <Effects of Example 5>

According to Example 5, the SMF 40 can clearly notify the UPF 50 of a slice (S-NSSAI) to be monitored.

### (Example 6)

In conventional techniques, it is unclear for which slice (S-NSSAI) the UPF 50 performs UP inactivity monitoring using a timer. Therefore, in conventional UP inactivity monitoring, it may not be possible to appropriately perform UP inactivity monitoring.

Thus, in Example 6, operations of the NW for associating a timer with an S-NSSAI will be described. Here, the NW may be the UPF 50. Further, the following operations may be operations of the UPF 50 that receives an instruction according to the operations of the SMF 40 in Example 5. Specifically, the NW performs operations as follows. Here, the timer is, for example, a timer for user plane inactivity monitoring, and more specifically, a User Plane Inactivity Timer, a PDU session slice usage inactivity timer, or the like. However, the timer is not limited to these timers.

The NW determines an S-NSSAI to be associated with a timer for monitoring UP inactivity for a slice as follows. By monitoring a slice (S-NSSAI) associated as described below using a timer, the NW can determine whether or not there is no traffic for a period of a timer value in the slice.

When the UE 20 is registered (slice-registered) in an HPLMN, the NW regards an S-NSSAI associated with a timer as an S-NSSAI (of the HPLMN) included in a PDU session establishment message (UL NAS transport message). An example in which an S-NSSAI associated with a timer is S-NSSAI #1 is the same as that shown in FIG. 4 described above.

As operation examples when the UE 20 is registered (slice-registered) in a VPLMN, there are the following operations (A) to (C).
(A) When the UE 20 is registered (slice-registered) in a VPLMN, the NW regards an S-NSSAI to be associated with a timer as a mapped S-NSSAI included in a PDU session establishment message (UL NAS transport message).
(B) When the UE 20 is registered (slice-registered) in a VPLMN, the NW regards an S-NSSAI to be associated with a timer as a combination of a serving S-NSSAI and a mapped S-NSSAI included in a PDU session establishment message (UL NAS transport message). The combination may be expressed as [S-NSSAI, mapped S-NSSAI].
(C) When the UE 20 is registered (slice-registered) in a VPLMN, the NW regards an S-NSSAI to be associated with a timer as a serving S-NSSAI included in a PDU session establishment message (UL NAS transport message).

FIG. 5 described above illustrates the operations (A), (B), and (C) described above.

### <Effects of Example 6>

According to Example 6, an S-NSSAI associated with a timer is clarified and, as a result, it is possible to appropriately perform UP inactivity monitoring for a slice.

### (Example 7)

Example 7 will now be described. In UP inactivity monitoring in conventional techniques, operations according to a timer value are unclear. Therefore, in the conventional techniques, it may not be possible to appropriately perform UP inactivity monitoring for a slice according to a timer value. Thus, in Example 7, operations in the NW according to a timer value set in a timer will be described. Here, the NW may be the UPF 50. Specific operations are as follows. Here, the timer is, for example, a timer for user plane inactivity monitoring and, more specifically, a User Plane Inactivity Timer, a PDU session slice usage inactivity timer, or the like. However, the timer is not limited to these timers.

The UPF 50 receives a new timer value from the SMF 40. When the timer value is neither "0" nor "deactivated", the UPF 50 stops the timer if a timer count is running, and then starts the timer with the value received from the SMF 40.

When the timer value is "0" or "deactivated", the UPF 50 stops the timer if a timer count is running, and further stops user plane inactivity monitoring for an associated slice (a slice identified by a network slice instance ID and/or an S-NSSAI).

Further, the following operation may be performed. When the timer value is "deactivated", the UPF 50 stops the timer if a timer count is running. The value "deactivated" means that an associated slice (a slice identified by a network slice instance ID and/or an S-NSSAI) is no longer a monitoring target (that is, a UP inactivity report is not needed).

### <Effects of Example 7>

According to Example 7, operations according to a timer value are clarified and, as a result, it is possible to appropriately perform UP inactivity monitoring for a slice.

### (Other examples (variations))

In all of the Examples described above, a slice is set as a monitoring target, and, for an S-NSSAI, which is an identifier of a slice, association with a timer and registration/deregistration and the like are performed. However, a target of the technology according to the present embodiment is not limited to a slice and an S-NSSAI.

For example, as another monitoring target, instead of a slice, a path in a network (a path for each quality) may be set, and a target of association with a timer and registration/deregistration and the like may be, instead of an S-NSSAI, an identifier that identifies a path for each quality. That is, in all of the Examples described above, a slice may be replaced with the path described above, and an S-NSSAI may be replaced with the identifier described above.

In another example, as a monitoring target, instead of a slice identified by an S-NSSAI, a slice instance may be set, and a target of association with a timer and registration/deregistration and the like may be, instead of an S-NSSAI, a slice instance ID. That is, in all of the Examples described above, a slice identified by an S-NSSAI may be replaced with the slice instance described above, and an S-NSSAI may be replaced with the slice instance ID described above.

### (Apparatus Configuration)

Here, the UE 20 is referred to as a terminal 20. Functional configuration examples of the AMF 30, the SMF 40, the UPF 50, and the terminal 20 that perform the processes and operations described above will be described. The AMF 30, the SMF 40, and the UPF 50 are each an example of a network node and have the same configuration in terms of functional configuration. Accordingly, hereinafter, the AMF 30, the SMF 40, and the UPF 50 are collectively referred to as network nodes 30, 40, and 50.

### <Processing apparatus 10>

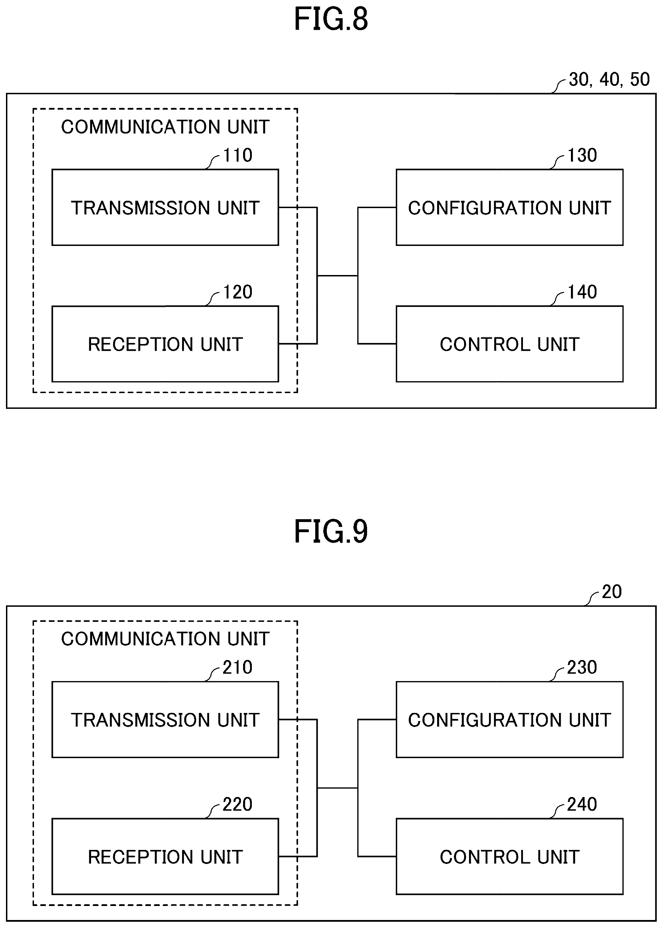

FIG. 8 is a diagram illustrating an example of a functional configuration of the network node 30, 40, or 50. As illustrated in FIG. 8, the network node 30, 40, or 50 includes a transmission unit 110, a reception unit 120, a configuration unit 130, and a control unit 140. The functional configuration illustrated in FIG. 8 is merely an example. As long as the operation according to the embodiment of the present invention can be performed, the functional division and the name of the functional unit may be any.

The transmission unit 110 includes a function of generating a signal to be transmitted to another apparatus and transmitting the signal by wire or wirelessly. The reception unit 120 includes a function of receiving various signals transmitted from another apparatus and acquiring, from the received signals, information of, for example, a higher layer. A communication unit including the transmission unit 110 and the reception unit 120 may be configured. The transmission unit 110 and the reception unit 120 may also be referred to as a transmitter and a receiver, respectively.

The configuration unit 130 stores, in a storage device, preconfigured configuration information and various pieces of configuration information to be transmitted to another apparatus, and reads the configuration information from the storage device as needed.

The control unit 140 controls the network node 30, 40, or 50. The functional unit related to information transmission in the control unit 140 may be included in the transmission unit 110, and the functional unit related to information reception in the control unit 140 may be included in the reception unit 120.

### <Terminal 20>

FIG. 9 is a diagram illustrating an example of a functional configuration of the terminal 20. As illustrated in FIG. 9, the terminal 20 includes a transmission unit 210, a reception unit 220, a configuration unit 230, and a control unit 240. The functional configuration illustrated in FIG. 9 is merely an example. The functional division and the name of the functional unit may be any division and name as long as the operation according to the embodiment of the present invention can be executed.

The transmission unit 210 includes a function of generating a signal to be transmitted to another apparatus and transmitting the signal wirelessly (or by wire). The reception unit 220 includes a function of receiving various signals transmitted from another apparatus (for example, a base station 10) and acquiring, from the received signals, information of, for example, a higher layer. A communication unit including the transmission unit 210 and the reception unit 220 may be configured. The transmission unit 210 and the reception unit 220 may also be referred to as a transmitter and a receiver, respectively.

The configuration unit 230 stores, in a storage device, preconfigured configuration information and various pieces of configuration information to be transmitted to another apparatus, and reads the configuration information from the storage device as needed.

The control unit 240 controls the terminal 20. The functional unit related to signal transmission in the control unit 240 may be included in the transmission unit 210, and the functional unit related to signal reception in the control unit 240 may be included in the reception unit 220.

### (Hardware Configuration)

The block diagrams (FIGS. 8 and 9) used in the description of the embodiment described above illustrate the block of functional units. Such functional blocks (configuration parts) are attained by at least one arbitrary combination of hardware and software. In addition, an attainment method of each of the functional blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

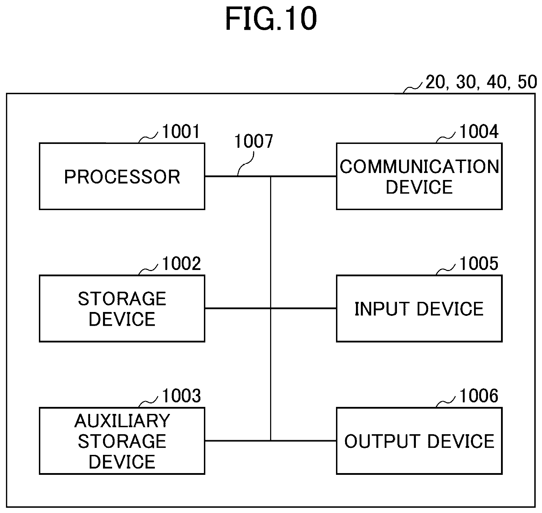

For example, the network node 30, 40, or 50, and the terminal 20 and the like in one embodiment of this disclosure may function as a computer for performing the processing of a radio communication method of this disclosure. FIG. 10 is a diagram illustrating an example of a hardware configuration of the network node 30, 40, or 50 and the terminal 20 and the like according to one embodiment of this disclosure. The network node 30, 40, or 50 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the network node 30, 40, or 50 and the terminal 20 and the like may be configured to include one or a plurality of apparatuses illustrated in the drawings, or may be configured not to include a part of the apparatuses.

Each function of the network node 30, 40, or 50 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the network node 30, 40, or 50 shown in Fig.8 may be attained by a control program that is stored in the storage device 1002 and is operated by the processor 1001. Also, for example, the control unit 240 of the terminal 20 shown in Fig.9 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wired network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the network node 30, 40, or 50 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

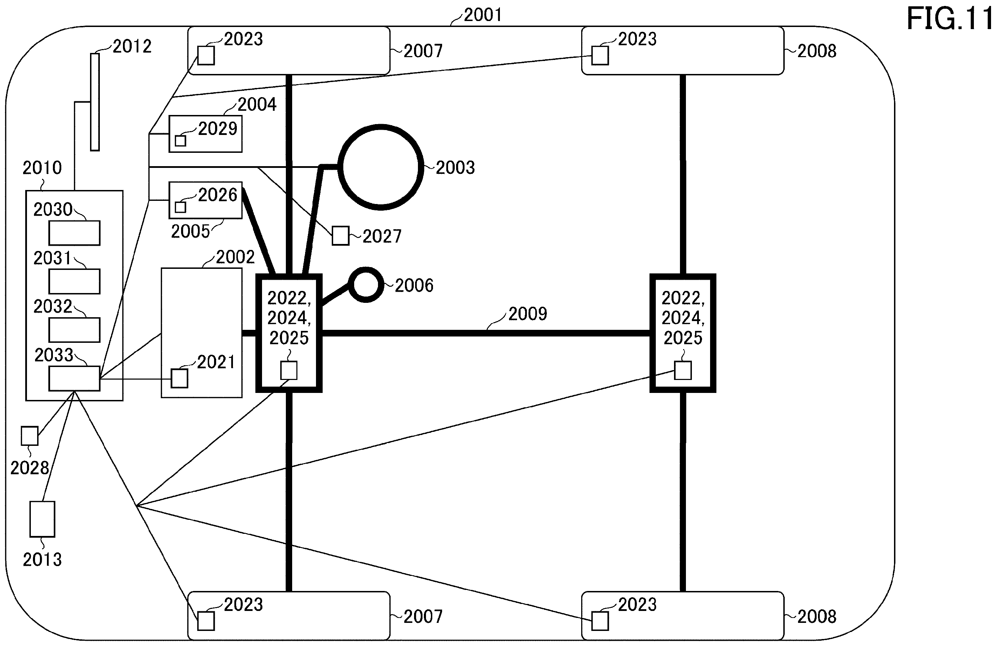

FIG. 11 shows a configuration example of a vehicle 2001 that can include the network node 30, 40, or 50 and the terminal. As shown in FIG. 11, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. The aspect/embodiment described in the present disclosure may be applied to a communication apparatus mounted on the vehicle 2001, and may be applied to, for example, the communication module 2013. For example, any of the network nodes 30, 40, and 50, or the terminal 20, may be included in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, etc.) that receives input from external sources and may also include an output device (for example, a display, a speaker, an LED lamp, a touch panel, etc.) that provides output to external destinations.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of, signals from the various sensors 2021 to 2028 described above input to the electronic control unit 2010, information obtained based on the signals, and information based on input from the outside (user) obtained via the information service unit 2012 to an external device via radio communication. The electronic control unit 2010, the various sensors 2021 to 2028, the information service unit 2012, and the like may be referred to as an input unit that receives an input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on the PDSCH (or data/information decoded from the PDSCH) received by the communication module 2013). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001. When the communication module 2013 includes any of the network nodes 30, 40, and 50, or the terminal 20, the communication module 2013 can perform operations of the included network node 30, 40, 50, or the terminal 20.

The present specification discloses at least the configurations according to Supplementary Note 1 to Supplementary Note 6 below.

### <Supplementary Note 1>

### [Clause 1]

A network node including:
a receiver configured to receive, from a terminal, a registration request for connection for a specific use; and
a controller having a function of performing deregistration of a slice identifier that does not have an associated session for a certain period of time, the controller being configured, when the registration request is received, not to perform processing for deregistration of a slice identifier allowed for the terminal.

### [Clause 2]

The network node as described in clause 1, wherein the specific use is an emergency call connection.

### [Clause 3]

A network node including:
a receiver configured to receive, from a terminal, a registration request including a request for prolonged registration of a slice identifier; and
a controller having a function of performing deregistration of a slice identifier that does not have an associated session for a certain period of time, the controller being configured, when the registration request is received, not to start a timer for a slice identifier allowed for the terminal, or not to perform deregistration of the slice identifier even when the timer expires.

### [Clause 4]

A terminal including:
a controller configured to determine to transmit a registration request for a specific use; and
a transmitter configured to transmit to a network node the registration request including a request for prolonged registration of a slice identifier.

### [Clause 5]

A processing method executed by a network node, the processing method including:
a step of receiving, from a terminal, a registration request for connection for a specific use; and
a step executed by a controller having a function of performing deregistration of a slice identifier that does not have an associated session for a certain period of time, the step including, when the registration request is received, not performing processing for deregistration of a slice identifier allowed for the terminal.

According to any one of clauses 1 to 5, a technique is provided that makes it possible to appropriately perform deregistration of a slice identifier. According to clause 2, it is possible to realize exception operations in the case of an emergency call connection.

### <Supplementary Note 2>

### [Clause 1]

A network node including:
a receiver configured to receive a registration request; and
a controller configured, when a terminal is registered in a home network, to associate a timer used for slice usage control with an allowed slice identifier in the home network.

### [Clause 2]

A network node including:
a receiver configured to receive a registration request; and
a controller configured, when a terminal is registered in a visited network, to associate a timer used for slice usage control with an allowed slice identifier that is a mapped slice identifier.

### [Clause 3]

A network node including:
a receiver configured to receive a registration request; and
a controller configured, when a terminal is registered in a visited network, to associate a timer used for slice usage control with a combination of allowed slice identifiers, the combination being a combination of a slice identifier of the visited network and a mapped slice identifier.

### [Clause 4]

A network node including:
a receiver configured to receive a registration request; and
a controller configured, when a terminal is registered in a visited network, to associate a timer used for slice usage control with an allowed slice identifier in the visited network.

### [Clause 5]

A processing method executed by a network node, the processing method comprising:
a step of receiving a registration request; and
a step of, when a terminal is registered in a home network, associating a timer used for slice usage control with an allowed slice identifier in the home network.

According to any one of clauses 1 to 5, a technique is provided that makes it possible to appropriately perform deregistration of a slice identifier.

### <Supplementary Note 3>

### [Clause 1]

A network node including:
a receiver configured to receive, from a specific network node, a new timer value of a timer used for slice usage control; and
a controller configured, when the timer value is neither "0" nor "deactivated", to stop the timer if the timer is running, and to start the timer with the new timer value or with a timer value locally set.

### [Clause 2]

The network node as described in clause 1, wherein, when the timer value is "0" or "deactivated", the controller stops the timer and executes deregistration of a slice corresponding to the timer.

### [Clause 3]

A terminal including:
a receiver configured to receive, from a specific network node, a new timer value of a timer used for slice usage control; and
a controller configured, when the timer value is neither "0" nor "deactivated", to stop the timer if the timer is running, and to start the timer with the new timer value.

### [Clause 4]

The terminal as described in clause 3, wherein, when the timer value is "0" or "deactivated", the controller stops the timer and executes deregistration of a slice corresponding to the timer.

### [Clause 5]

A processing method executed by a network node, the processing method including:
a step of receiving, from a specific network node, a new timer value of a timer used for slice usage control; and
a step of, when the timer value is neither "0" nor "deactivated", stopping the timer if the timer is running, and starting the timer with the new timer value or with a timer value locally set.

According to any one of clauses 1 to 5, a technique is provided that makes it possible to appropriately perform deregistration of a slice identifier. According to clauses 2 and 4, it is possible to realize slice deregistration according to a timer value.

### <Supplementary Note 4>

### [Clause 1]

A network node including:
a controller configured, when a terminal is registered in a visited network, to include, in a message instructing monitoring of a user plane, a mapped slice identifier included in a session establishment message; and
a transmitter configured to transmit the message including the mapped slice identifier to a specific network node.

### [Clause 2]

A network node including:
a controller configured, when a terminal is registered in a visited network, to include, in a message instructing monitoring of a user plane, a combination of a slice identifier of the visited network and a mapped slice identifier that are included in a session establishment message; and
a transmitter configured to transmit the message including the combination to a specific network node.

### [Clause 3]

A network node including:
a receiver configured to receive a PFCP session establishment request from a specific network node; and
a controller configured, when a terminal is registered in a visited network, to associate a timer used for monitoring a user plane with a mapped slice identifier included in a PDU session establishment message.

### [Clause 4]

A network node including:
a receiver configured to receive a PFCP session establishment request from a specific network node; and
a controller configured, when a terminal is registered in a visited network, to associate a timer used for monitoring a user plane with a combination of a slice identifier of the visited network and a mapped slice identifier that are included in a PDU session establishment message.

### [Clause 5]

A processing method executed by a network node, the processing method including:
a step of, when a terminal is registered in a visited network, including, in a message instructing monitoring of a user plane, a mapped slice identifier included in a session establishment message; and
a step of transmitting the message including the mapped slice identifier to a specific network node.

According to any one of clauses 1 to 5, a technique is provided that makes it possible to appropriately perform monitoring necessary for stopping use of a slice.

### <Supplementary Note 5>

### [Clause 1]

A network node including:
a receiver configured to receive, from a specific network node, a new timer value of a timer used for slice monitoring; and
a controller configured, when the timer value is neither "0" nor "deactivated", to stop the timer if the timer is running, and to start the timer with the new timer value.

### [Clause 2]

The network node as described in clause 1, wherein, when the timer value is "0" or "deactivated", the controller stops the timer and stops monitoring of a slice corresponding to the timer.

### [Clause 3]

A processing method executed by a network node, the processing method including:
a step of receiving, from a specific network node, a new timer value of a timer used for slice monitoring; and
a step of, when the timer value is neither "0" nor "deactivated", stopping the timer if the timer is running, and starting the timer with the new timer value.

According to any one of clauses 1 to 3, a technique is provided that makes it possible to appropriately perform monitoring necessary for stopping use of a slice. According to clause 2, it is possible to realize stopping use of a slice according to a timer value.

### <Supplementary Note 6>

### [Clause 1]

A network node including:
a controller configured to include a slice identifier for which a timer used for slice usage control has expired in a set of rejected or pending slice identifiers; and
a transmitter configured to transmit to a terminal a message including slice identifiers included in the set.

### [Clause 2]

The network node as described in clause 1, wherein the transmitter transmits to the terminal a message that does not include a slice identifier in the set of rejected or pending slice identifiers.

### [Clause 3]

A terminal including:
a receiver configured to receive a message having a set of rejected or pending slice identifiers including a slice identifier for which a timer used for slice usage control has expired; and
a controller configured to update slice identifiers stored in a storage device based on the set.

### [Clause 4]

The terminal as described in clause 3, wherein, when the receiver receives a message in which the set does not include a slice identifier, the controller deletes slice identifiers from a set of rejected or pending slice identifiers in the terminal.

### [Clause 5]

A processing method executed by a network node, the processing method including:
a step of including a slice identifier for which a timer used for slice usage control has expired in a set of rejected or pending slice identifiers; and
a step of transmitting to a terminal a message including slice identifiers included in the set.

According to any one of clauses 1 to 5, a technique is provided that makes it possible to appropriately perform deregistration of a slice identifier. According to clauses 2 and 4, it is possible to realize restoration of slice identifiers that have been rejected or made pending.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the network node 30, 40, or 50 and the terminal 20 have been described by using a functional block diagram, but such an apparatus may be attained by hardware, software, or a combination thereof. Each of software that is operated by a processor of the base station 10 and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least 5G and one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the network node 30, 40 or 50 to the terminal may be read as the network node 30, 40 or 50 instructing the terminal to perform control and operation based on the information.

In the present disclosure, the terms "Mobile Station (MS)", "user terminal", "User Equipment (UE)", "terminal", and the like may be used interchangeably.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the network node 30, 40 or 50 and the terminal 20 may be referred to as a transmitting apparatus, a receiving apparatus, a communication apparatus, and the like. Note that, at least one of the network node 30, 40 or 50 and the terminal 20 may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the network node 30, 40 or 50 and the terminal 20 also includes an apparatus that is not necessarily moved at the time of a communication operation. For example, at least one of the network node 30, 40 or 50 and the terminal 20 may be an internet of things (IoT) device such as a sensor.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some nonlimiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first", "second", and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be an exclusive-OR.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

10 base station
20 terminal
30 AMF
40 SMF
50 UPF
100 AUSF
110 transmission unit
120 reception unit
130 configuration unit
140 control unit
210 transmission unit
220 reception unit
230 configuration unit
240 control unit
1001 processor
1002 storage device
1003 auxiliary storage device
1004 communication device
1005 input device
1006 output device

## Claims

1. A network node comprising:
a receiver configured to receive, from a terminal, a registration request for connection for a specific use; and
a controller having a function of performing deregistration of a slice identifier that does not have an associated session for a certain period of time, the controller being configured such that, when the registration request is received, the controller does not perform processing for deregistration of a slice identifier allowed for the terminal.

2. The network node as claimed in claim 1, wherein the specific use is an emergency call connection.

3. A network node comprising:
a receiver configured to receive, from a terminal, a registration request including a request for prolonged registration of a slice identifier; and
a controller having a function of performing deregistration of a slice identifier that does not have an associated session for a certain period of time, the controller being configured such that, when the registration request is received, the controller does not start a timer for a slice identifier allowed for the terminal, or does not perform deregistration of the slice identifier even when the timer expires.

4. A terminal comprising:
a controller configured to determine to transmit a registration request for a specific use; and
a transmitter configured to transmit to a network node the registration request including a request for prolonged registration of a slice identifier.

5. A processing method executed by a network node, the processing method comprising:
a step of receiving, from a terminal, a registration request for connection for a specific use; and
a step executed by a controller having a function of performing deregistration of a slice identifier that does not have an associated session for a certain period of time, the step comprising, when the registration request is received, not performing processing for deregistration of a slice identifier allowed for the terminal.
